(19) Europäisches Patentamt
European Patent Office
Office européen des brevets

(11) **EP 4 546 866 A1**

(12) **EUROPEAN PATENT APPLICATION**
published in accordance with Art. 153(4) EPC

(43) Date of publication:
**30.04.2025 Bulletin 2025/18**

(21) Application number: **23826245.5**

(22) Date of filing: **14.06.2023**

(51) International Patent Classification (IPC):
***H04W 28/22*** (2009.01)

(52) Cooperative Patent Classification (CPC):
**H04W 28/22; H04W 72/1263**

(86) International application number:
**PCT/CN2023/100235**

(87) International publication number:
**WO 2023/246596 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.06.2022 CN 202210706882**

(71) Applicant: **ZTE Corporation**
**Shenzhen, Guangdong 518057 (CN)**

(72) Inventors:
• **WANG, Zisheng**
**Shenzhen, Guangdong 518057 (CN)**
• **HUANG, Qisheng**
**Shenzhen, Guangdong 518057 (CN)**
• **LI, Yan**
**Shenzhen, Guangdong 518057 (CN)**

(74) Representative: **Vossius & Partner**
**Patentanwälte Rechtsanwälte mbB**
**Siebertstraße 3**
**81675 München (DE)**

(54) **SCHEDULING METHOD AND APPARATUS, AND COMPUTER-READABLE STORAGE MEDIUM**

(57)    The present application provides a scheduling method, a scheduling apparatus and a computer readable storage medium. The scheduling method includes: acquiring transmission information corresponding to a terminal, wherein the transmission information includes at least one of uplink transmission information or downlink transmission information (S100); acquiring an information feature according to the transmission information (S200); determining an information-transmission-rate limit value of the terminal based on the information feature (S300); and scheduling the transmission information according to the information-transmission-rate limit value (S400).

Acquiring transmission information corresponding to a terminal, in which the transmission information includes at least one of uplink transmission information or downlink transmission information — S100

Acquiring an information feature according to the transmission information — S200

Determining an information-transmission-rate limit value of the terminal based on the information feature — S300

Scheduling the transmission information according to the information transmission rate limit value — S400

**Fig. 2**

EP 4 546 866 A1

**Description**

**CROSS-REFERENCE TO RELATED APPLICATION**

The present application is based on and claims priority to Chinese Patent Application No. 202210706882.8 filed on June 21, 2022, which is incorporated herein by reference in its entirety.

**TECHNICAL FIELD**

Embodiments of the present application relate to, but are not limited to, the field of information processing technology, and particularly, to a scheduling method, a scheduling apparatus and a computer readable storage medium.

**BACKGROUND**

In a wireless local area network (WLAN), a plurality of users need to be connected to an access point (AP); under a condition that the AP serves a plurality of users with different signal qualities at the same time, the plurality of users need to use a preemptive air interface competition strategy for forwarding data, and frequent preemption of the air interface by low rate users leads to a decrease in throughput of high rate users; in order to solve this problem, a traditional air interface fairness algorithm ensures that individual users have the same air interface sending time duration as much as possible, especially, air interface occupancy of the low rate users is reduced as much as possible, so that the high rate users preempt more air interfaces to improve overall multi-user performance of WLAN; however, the AP does not provide enough sending windows for a part of low rate users since they have relatively low rates, resulting in a device disconnection or a packet loss, and a poor user experience.

SUMMARY

Embodiments of the present application provide a scheduling method, a scheduling apparatus and a computer readable storage medium.

In a first aspect, the embodiments of the present application provide a scheduling method including: acquiring transmission information corresponding to a terminal, in which the transmission information includes at least one of uplink transmission information or downlink transmission information; acquiring an information feature according to the transmission information; determining an information-transmission-rate limit value of the terminal based on the information feature; and scheduling the transmission information according to the information transmission rate limit value.

In a second aspect, the embodiments of the present application further provide a scheduling apparatus including a memory, a processor and a computer program stored on the memory and executable on the processor, in which the processor, when executing the computer program, implements the above scheduling method.

In a third aspect, the embodiments of the present application further provide a computer readable storage medium storing a computer executable instruction, in which the computer executable instruction is used for performing the above scheduling method.

**BRIEF DESCRIPTION OF THE DRAWINGS**

Fig. 1 is a schematic view of an apparatus architecture for performing a scheduling method according to an embodiment of the present application;

Fig. 2 is a flowchart of a scheduling method according to an embodiment of the present application;

Fig. 3 is a flowchart for acquiring an information feature according to an embodiment of the present application;

Fig. 4 is a flowchart for determining an information-transmission-rate limit value according to an embodiment of the present application;

Fig. 5 is a specific flowchart for determining an information-transmission-rate limit value according to an embodiment of the present application;

Fig. 6 is a specific flowchart for determining an information-transmission-rate limit value according to another embodiment of the present application;

Fig. 7 is a specific flowchart for determining an information-transmission-rate limit value according to still another embodiment of the present application;

Fig. 8 is a flowchart for predicting a rate limit according to an embodiment of the present application;

Fig. 9 is a flowchart for scheduling transmission information according to an embodiment of the present application;

Fig. 10 is a specific flowchart for scheduling transmission information according to an embodiment of the present application;

Fig. 11 is a specific flowchart for scheduling transmission information according to another embodiment of the present application;

Fig. 12 is a specific flowchart for performing a rate limit scheduling on transmission information according to an embodiment of the present application;

Fig. 13 is a specific flowchart for performing a rate limit scheduling on transmission information according to another embodiment of the present application;

Fig. 14 is a specific flowchart for performing a rate limit scheduling on transmission information according to another embodiment of the present application; and

Fig. 15 is a schematic structural view of a scheduling apparatus according to an embodiment of the present application.

## DETAILED DESCRIPTION

In order to make objects, technical solutions and advantages of the present application clearer, the present application is further described in detail below with reference to the accompanying drawings and embodiments. It should be understood that specific embodiments are described herein only for illustration of the present application instead of limiting the present application.

It should be noted that, although functional modules of the apparatus are shown as discrete parts in the schematic view, and the logical order is shown in the flowchart, in some cases, the modules may be shown in a manner different from that in the schematic view, or shown or described steps may be performed in an order different from that in the flowchart. The terms "first", "second" and the like in the description, claims and the above description of the accompanying drawings of the present application are used for distinguishing similar objects, and not necessarily for describing a specific order or priority in order.

The present application provides a scheduling method, a scheduling apparatus and a computer readable storage medium. Transmission information corresponding to a terminal is acquired, and the transmission information includes at least one of uplink transmission information or downlink transmission information; next, an information feature is acquired according to the transmission information; then, an information-transmission-rate limit value of the terminal is determined based on the information feature; and finally, the transmission information is scheduled according to the information transmission rate limit value. According to the technical solution provided in the embodiments of the present application, the information-transmission-rate limit value may be determined based on the information feature corresponding to the terminal, and finally, the transmission information is scheduled according to the information transmission rate limit value, thereby bringing a better use experience to a user.

The embodiments of the present application will be further described below with reference to the accompanying drawings.

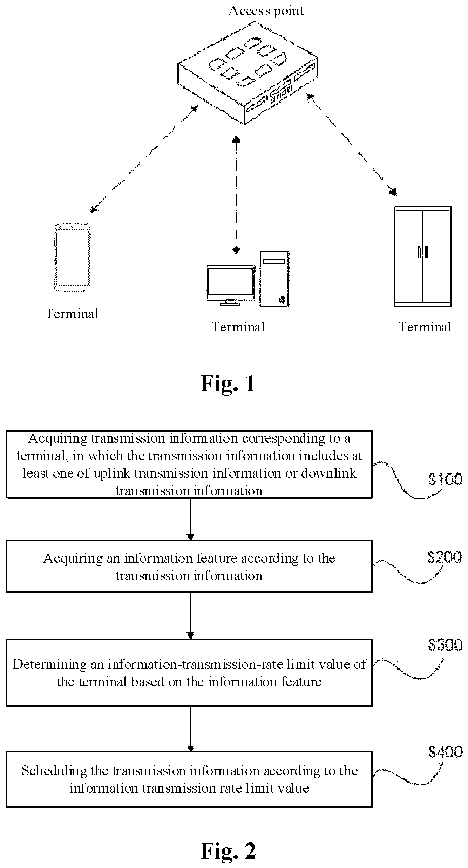

As shown in Fig. 1, Fig. 1 is a schematic view of an apparatus architecture for performing a scheduling method according to an embodiment of the present application. In an example of Fig. 1, the apparatus architecture includes at least one access point (AP) and several terminals, and the terminals in the apparatus architecture are all in data connection with the AP(s). The AP(s) provide internet access for the terminals, and one AP may serve one or more terminals at the same time.

In some embodiments of the present application, the access point refers to a device for a user terminal in a wireless local area network (WLAN) to access a network. The WLAN is widely provided with the APs, and the user accesses the APs of the WLAN through a network card, and then may access a wired network. A wireless AP is an access point that a user of a wireless device uses to enter the wired network and is mainly used inside broadband homes, buildings, campuses, parks, warehouses, factories and other places needing wireless monitoring. It typically covers a distance from tens of meters to hundreds of meters and may also be used for long-distance transmission, where a farthest distance it may reach may be about 30KM, and the main technology it uses is IEEE802.11 series. Most wireless APs also have an access point client mode that can be wirelessly connected to other APs to extend coverage of the network. The AP may include a router, a gateway and other devices with a data forwarding function that can be used by the terminal for accessing an external network, which is not limited here.

In some embodiments of the present application, the terminal may be a mobile phone, a computer, an internet of things device or other APs, the mobile phone may be connected to the AP in a wireless manner, and the computer and the internet of things device may be connected to the AP in a wireless or wired manner, which is not limited here. The internet of things device may be a household electrical appliance such as a refrigerator, an air conditioner and a washing machine, and these household electrical appliances can be considered to be the terminal in the embodiments of the present application as long as they have a network connection function.

It is noted that, there are a downlink and an uplink between the AP and the terminal, and in the embodiments of the present application, data sent by the AP to the terminal is considered to be downlink data, and data sent by the terminal to the AP is considered to be uplink data. Communication between the AP and the terminal is based on, but not limited to, IEEE802.11 series protocols; and it is noted that, in the embodiments of the present application, the downlink is represented as Tx, and the uplink is represented as Rx.

It is noted that, the AP in embodiments of the present application generally includes a radio frequency module, a physical link layer and a media access control layer. Signals transmitted by the terminal are demodulated by the radio frequency module and the physical link layer and sent to the medium access control layer. Specific message data then is extracted by the media access control layer, and the message data is information sent by the device to the internet.

The apparatus architecture and application scenarios described in the embodiments of the present application are for illustrating the technical solution of the embodiments of the present application more clearly, and do not constitute a limitation to the technical solution according to the embodiments of the present application. Those skilled in the field would know that, as apparatus architectures evolve and new application scenarios emerge, the technical solution according to the embodiments of the present application are equally applicable to similar technical problems.

Those skilled in the art may appreciate that the apparatus architecture shown in Fig. 1 does not constitute a limitation to the embodiments of the present application, and may include more or fewer components than shown, or may combine certain components or different arrangements of the components.

Based on the structure of the above apparatus architecture, various embodiments of the scheduling method of the present application are provided.

As shown in Fig. 2, Fig. 2 is a flowchart of a scheduling method according to an embodiment of the present application. The scheduling method includes, but is not limited to, step S100, step S200, step S300 and step S400.

Step S100: acquiring transmission information corresponding to a terminal, in which the transmission information includes at least one of uplink transmission information or downlink transmission information;

Step S200, acquiring an information feature according to the transmission information;

Step S300, determining an information-transmission-rate limit value of the terminal based on the information feature; and

Step S400, scheduling the transmission information according to the information transmission rate limit value.

According to the embodiments of the present application, in a scheduling process, the transmission information corresponding to the terminal is acquired, and the transmission information includes at least one of the uplink transmission information or the downlink transmission information; next, the information feature is acquired according to the transmission information; then, the information-transmission-rate limit value of the terminal is determined based on the information feature ; and finally, the transmission information is scheduled according to the information transmission rate limit value. According to the technical solution provided in the embodiments of the present application, the information-transmission-rate limit value may be determined based on the information feature corresponding to the terminal, and finally, the transmission information is scheduled according to the information transmission rate limit value, thereby bringing the better use experience to the user.

It is noted that, the scheduling method may be applied to the AP, the information feature is acquired by the AP according to the transmission information, and the transmission information may include at least one of the uplink transmission information or the downlink transmission information; and the uplink transmission information in the present application is transmission information sent by the terminal to the AP, and the downlink transmission information in the present application is transmission information sent by the AP to the terminal.

It may be understood that, the information feature acquired according to the transmission information may be used for characterizing a feature of the transmission information, and the feature may be used for quantifying a user experience; then, the information-transmission-rate limit value of the terminal is determined based on the information feature, and the information-transmission-rate limit value may provide a suggestion about an information transmission rate of the terminal; finally, the transmission information is scheduled according to the information-transmission-rate limit value and a situation of actual transmission information, so that the transmission information can be scheduled based on the information feature of the transmission information corresponding to the terminal, thereby bringing a good use experience to the user. In some examples, under a condition that the user watches a video using the mobile phone, an information-transmission-rate limit value of the mobile phone is determined by the AP based on an information feature of video information transmitted by the mobile phone, and such information feature may specifically be a time delay feature when a video data packet is transmitted. In order to make the user not feel stuck when watching the video, a transmission time delay of the video data packet must not be greater than a certain set value, and an information-transmission-rate limit value of the mobile phone is determined based on the information feature of the video information, so that transmission information processes of the mobile phone and the AP may compete for air interfaces according to the above determined information-transmission- rate limit value to achieve data scheduling, and thus the user does not feel stuck when watching the video, thereby bringing a better experience to the user.

It is noted that, in an air interface fairness method according to the present application, a rate limit of the user is calculated without relying on parameters of a communication system, such as, a packet loss rate, and the like. Quantifying the user experience is provided in the present application, and an uplink rate limit and a downlink rate limit of the user are adjusted according to the information transmission rate limit value, so that an air interface fairness method providing an optimal user experience is finally achieved.

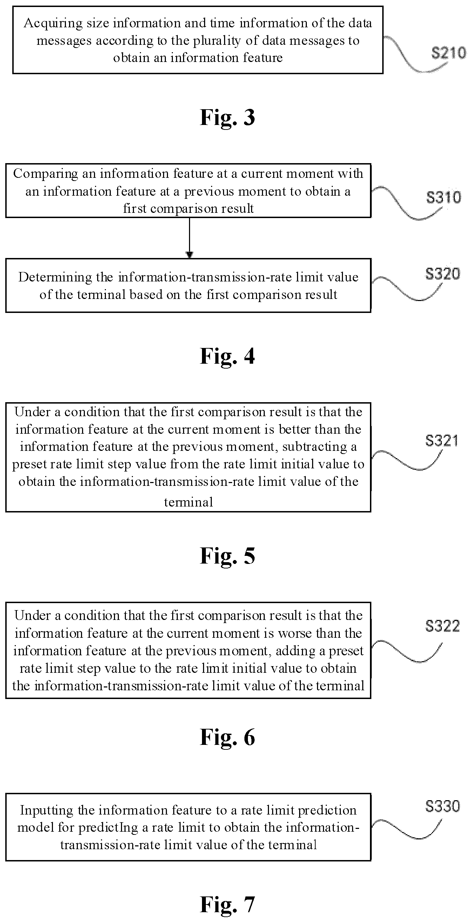

As shown in Fig. 3, the transmission information includes a plurality of data messages, and the above step S200 includes, but is not limited to, step S210:

Step S210, acquiring size information and time information of the data messages according to the plurality of data messages to obtain an information feature.

In an embodiment of the present application, in order to acquire the information feature from the transmission information, it is necessary to acquire the size information and the time information of the data messages according to the plurality of data messages, and then the information feature may be obtained.

In an embodiment of the present application, the size information of the data message may include a maximum message, a minimum message, an average message size and a variance of the message size, and a unit of the maximum message, the minimum message and the average message size is byte; and the time information may include a maximum message exchange time duration, a minimum message exchange time duration, an average message exchange time duration and a variance of the message exchange time duration, and a unit of the maximum message exchange time duration, the minimum message exchange time duration and the average message exchange time duration is millisecond. The size information of the data message may further include a downlink total message size and an uplink total message size, and a unit of the downlink total message size and the uplink total message size is also byte. It may be understood that, the user experience is determined by the maximum message exchange time duration and the variance of the message exchange time duration, and a data traffic of a current user is determined by the total message sizes.

In some examples, a main user experience in WLAN is whether a service is fluent or whether service download and upload rates are fast enough. A main index for quantifying the service fluency is a time duration between two adjacent messages of a service data stream. Under a condition that an average time duration is great, the user may experience a service delay. However, under a condition that a maximum time duration in a period of time is relatively great, the user may experience a stuck service. Therefore, in order to quantify the user experience, a timestamp is added by a user analysis module to each message sent and received. Statistics are performed on each data stream to collect a data stream feature in a period of time (T) for the user. The data stream feature may be a maximum message size, a minimum message size and an average message size ($p_{max}$, $p_{min}$, $p_{avr}$), and a unit of the maximum message size, the minimum message size and the average message size is byte. The variance of the message size is $\sigma_p^2$ ; and the maximum message exchange time duration, the minimum message exchange time duration and the average message exchange time duration are ($t_{max}$, $t_{min}$, $t_{avr}$) , and a unit of the maximum message exchange time duration, the minimum message exchange time duration and the average message exchange time duration is millisecond. The variance of the message exchange time duration is $\sigma_t^2$ ; the downlink total message size is $p_{tx,total}$, the uplink total message size is $p_{rx,total}$, and a unit of the downlink total message size and the uplink total message size is byte; and a collection time duration of data stream feature is one second.

As shown in Fig. 4, the above step S300 includes, but is not limited to, step S310 and step S320:

Step S310, comparing an information feature at a current moment with an information feature at a previous moment to obtain a first comparison result;
Step S320, determining the information-transmission-rate limit value of the terminal based on the first comparison result.

In an embodiment of the present application, in a process of performing a dynamic rate limit analysis, the information feature at the current moment may be compared with the information feature at the previous moment, so that the first comparison result is obtained; then, the information-transmission-rate limit value of the terminal may be determined based on the first comparison result.

It may be understood that, the first comparison result may be obtained by comparing the information feature at the current moment with the information feature at the previous moment, then, the information-transmission-rate limit value of the terminal is determined according to the above obtained first comparison result.

As shown in Fig. 5, the transmission information corresponds to a preset rate limit initial value, and the above step S320 includes, but is not limited to, step S321:

Step S321, under a condition that the first comparison result is that the information feature at the current moment is better than the information feature at the previous moment, subtracting a preset rate limit step value from the rate limit initial value to obtain the information-transmission-rate limit value of the terminal.

In an embodiment of the present application, under a condition that the first comparison result is that the information feature at the current moment is better than the information feature at the previous moment, the preset rate limit step value is subtracted from the rate limit initial value, so that the information-transmission-rate limit value of the terminal is obtained; it may be understood that, under a condition that the first comparison result is that the information feature at the current moment is better than the information feature at the previous moment means that an information transmission rate at the current moment is better than an information transmission rate at the previous moment, so that a rate limit step value may be subtracted from a preset rate limit initial value, the preset rate limit initial value may be reduced, and the information-transmission-rate limit value may be better adapted to a current air interface competition method.

As shown in Fig. 6, the transmission information corresponds to the preset rate limit initial value, and the above step S320 includes, but is not limited to, step S322:

Step S322, under a condition that the first comparison result is that the information feature at the current moment is worse than the information feature at the previous moment, adding the rate limit initial value to a preset rate limit step value to obtain the information-transmission-rate limit value of the terminal.

In an embodiment of the present application, under a condition that the first comparison result is that the information feature at the current moment is worse than the information feature at the previous moment, the rate limit initial value is added to the preset rate limit step value, so that the information-transmission-rate limit value of the terminal is obtained; it may be understood that, under a condition that the first comparison result is that the information feature at the current moment is better than the information feature at the previous moment means that an information transmission rate at the current moment is worse than an information transmission rate at the previous moment, so that a preset rate limit initial value may be added to a rate limit step value, the preset rate limit initial value may be increased, and the information-transmission-rate limit value may be better adapted to a current air interface competition method.

It is noted that, a user rate limit value is determined by an existing air interface fairness algorithm according to a communication index, such as a packet loss rate and a user rate. The user experience is not directly improved by such method. A dynamic rate limit analysis method based on user experience is provided in the present application. The principle of the dynamic rate limit analysis method is that, a rate limit value $l_{i,tx}$ and a rate limit value $l_{i,rx}$ are set for an uplink and a downlink of an i-th user, respectively; a quantification index of the user experience is acquired by the user analysis module; and under a condition that the quantification index of the user experience deteriorates, a corresponding rate limit value is increased. Under a condition that the quantification index of the user experience does not deteriorates, the rate limit value is decreased; and the above steps are repeated until the user experience is stable.

In some examples, the rate limit value $l_{i,tx}$ and the rate limit value $l_{i,rx}$ are set as integers, and a unit of the rate limit value $l_{i,tx}$ and the rate limit value $l_{i,rx}$ is Mbps. $S_{tx}$ and $S_{rx}$ are defined as rate limit step parameters. s is defined as a user quantification parameter, $s'$ is defined as a user quantization parameter at the previous moment, and the user quantification parameter is the information feature; and since there are a plurality of user quantification parameters, s and s' are vectors, and if $\|s\| - \|s'\| > 0$, $l_{i,tx} = l_{i,tx} + S_{tx}$; if not, $l_{i,tx} = l_{i,tx} - S_{tx}$. It is noted that, the implementation is similar in an uplink Rx direction.

As shown in Fig. 7, the above step S300 includes, but is not limited to, step S330:

Step S330, inputting the information feature to a rate limit prediction model to predict a rate limit to obtain the information-transmission-rate limit value of the terminal.

In an embodiment of the present application, the information feature is inputted to the rate limit prediction model to predict the rate limit, so that the information-transmission-rate limit value of the terminal may be obtained. The rate limit prediction model may be a reinforcement learning model.

It is noted that, reinforcement learning is mainly composed of an agent, an environment, a state, an action and a reward, after a certain action is executed by the agent, the environment will be converted into a new state, and a reward signal (a positive reward or a negative reward) will be given to the new state by the environment; then, a new action is executed by the agent based on a certain strategy according to the new state and the reward provided by the environment; and the above process is a way by which the agent interact with the environment based on the state, the action and the reward.

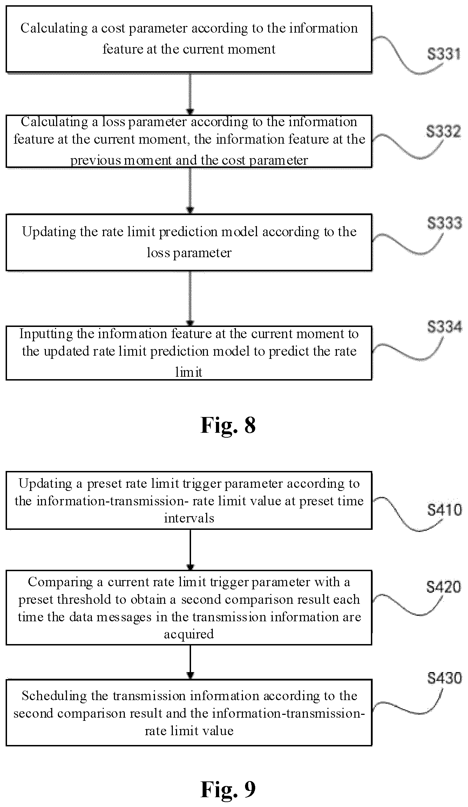

As shown in Fig. 8, the above step S330 includes, but is not limited to, step S331, step S332, step S333 and step S334.

Step S331, calculating a cost parameter according to the information feature at the current moment;

Step S332, calculating a loss parameter according to the information feature at the current moment, the information feature at the previous moment and the cost parameter;

Step S333, updating the rate limit prediction model according to the loss parameter;

Step S334, inputting the information feature at the current moment to the updated rate limit prediction model to predict the rate limit.

In an embodiment of the present application, in a process of predicting the rate limit using the rate limit prediction model, firstly, the cost parameter is calculated according to the information feature at the current moment; next, the loss parameter is calculated according to the information feature at the current moment, the information feature at the previous moment and the cost parameter; then, the rate limit prediction model is updated according to the loss parameter; and finally, the information feature at the current moment is inputted to the updated rate limit prediction model to predict the rate limit, so that the information-transmission-rate limit value of the terminal may be obtained.

In some examples, the rate limit prediction model is the reinforcement learning model, and an optimal information-transmission-rate limit value is calculated by the reinforcement learning model using an on-line deep Q learning network (DQN). After the first booting up, an i-th reinforcement learning model in a Tx direction randomly initializes one convolutional neural network $Q_{i,tx}(s|\theta)$. An input s of the convolutional neural network $Q_{i,tx}(s|\theta)$ is the information feature in the above embodiments. An output of the convolutional neural network is an integer from 0 to 4095, which represents an optimal rate limit value of the user and is in a unit of Mbps; and $D_{i,tx}$ is defined as an output result. A parameter $\theta$ is a hyperparameter of the convolutional neural network $Q_{i,tx}(s|\theta)$ and iterated continuously in an on-line training process. The reinforcement learning module triggers a neural network optimization each time the information feature is received. The loss parameter is set as:

$$L_{i,tx}(\theta) = E\left(\left(r_{tx} + \max\left(Q_{i,tx}\left(s^{'}|\theta^{'}\right)\right) - Q_{i,tx}(s|\theta)\right)^2\right)$$

where $s'$ is an input of a previous neural network optimization, $\theta'$ is a hyperparameter of a previous iteration, and $r_{tx}$ is a cost. The cost function represents an effect of a current operation on the user experience. If $r_{tx} > 0$, it represents a recent user experience is good, and if not, it represents the user experience is relatively poor. For each user, the cost is calculated as follows:

$$r_{tx} = \begin{cases} -w_1(t_{avr} - 50) - w_2(t_{max} - 100) & p_{tx,total}/T > 100000 \\ 0 & \text{otherwise} \end{cases}$$

where $t_{avr}$ is an average time delay, $t_{max}$ is a maximum time delay jitter, $w_1$ represents an average time delay weight, $w_2$ represents a maximum time delay jitter weight, $p_{tx,total}$ represents the downlink total message size, and T represents a sampling time; and under a condition that the average time delay is greater than 50 milliseconds, and the maximum time delay jitter exceeds 100 milliseconds, it means that the user experience is relatively poor for a current parameter configuration, and the cost is negative. Under a condition that total throughput of the user is not greater than 10M bytes, it may be considered that the user is not using a heavy load application currently, and the cost is 0 under this condition. After the cost is calculated, a set gradient descent algorithm is used for updating a parameter of the reinforcement learning model; and it is noted that, a reinforcement learning model in a Rx direction is the same as the reinforcement learning model in the Tx direction, and a subscript tx may be replaced with rx.

As shown in Fig. 9, the transmission information includes the plurality of data messages, and the above step S400 includes, but is not limited to, step S410, step S420 and step S430:

Step S410, updating a preset rate limit trigger parameter according to the information-transmission-rate limit value at preset time intervals;

Step S420, comparing a current rate limit trigger parameter with a preset threshold to obtain a second comparison result each time the data messages in the transmission information are acquired;

Step S430, scheduling the transmission information according to the second comparison result and the information transmission rate limit value.

**In** an embodiment of the present application, the preset rate limit trigger parameter is updated according to the information-transmission-rate limit value at preset time intervals; then, the current rate limit trigger parameter is compared with the preset threshold to obtain the second comparison result each time the data messages in the transmission information are acquired; and finally, the transmission information is scheduled according to the second comparison result and the information transmission rate limit value.

It is noted that, a determination needs to be performed before a rate limit is performed on the transmission information, and a determination condition in the present application is that the current rate limit trigger parameter is compared with the preset threshold, so that the second comparison result may be obtained, and finally, the transmission information is scheduled according to the second comparison result and the information transmission rate limit value.

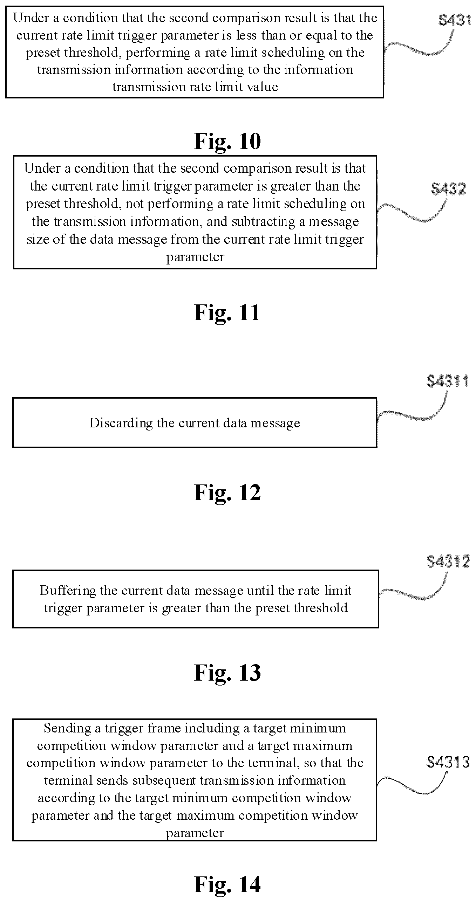

As shown in Fig. 10, the above step S430 includes, but is not limited to, step S431:

Step S431, under a condition that the second comparison result is that the current rate limit trigger parameter is less than or equal to the preset threshold, performing a rate limit scheduling on the transmission information according to the information transmission rate limit value.

In an embodiment of the present application, under a condition that the second comparison result is that the current rate limit trigger parameter is less than or equal to the preset threshold, it is determined that the rate limit scheduling needs to be performed on the transmission information, and then, the rate limit scheduling is performed on the transmission information according to the information transmission rate limit value.

As shown in Fig. 11, the above step S430 includes, but is not limited to, step S432:

Step S432, under a condition that the second comparison result is that the current rate limit trigger parameter is greater than the preset threshold, not performing a rate limit scheduling on the transmission information, and subtracting a message size of the data message from the current rate limit trigger parameter.

In an embodiment of the present application, under a condition that the second comparison result is that the current rate limit trigger parameter is greater than the preset threshold, it is determined that the rate limit scheduling does not need to be performed on the transmission information, the transmission information is scheduled according to an original data transmission rate, and the message size of the data message is subtracted from the current rate limit trigger parameter to prepare for a subsequent rate limit determination.

As shown in Fig. 12, under a condition that the transmission information is the downlink transmission information, the above step S431 includes, but is not limited to, step S4311:

Step S4311, discarding the current data message.

In an embodiment of the present application, under a condition that the transmission information is the downlink transmission information, in a process of performing the rate limit scheduling on the transmission information, the current data message may be discarded, so that the rate limit scheduling is performed, and the information transmission of other terminals by occupying the air interface is not affected, thereby improving an overall service performance of the AP.

As shown in Fig. 13, under a condition that the transmission information is the downlink transmission information, the above step S431 includes, but is not limited to, step S4312:

Step S4312, buffering the current data message until the rate limit trigger parameter is greater than the preset threshold.

In an embodiment of the present application, under a condition that the transmission information is the downlink transmission information, in the process of performing the rate limit scheduling on the transmission information, the current data message may be buffered, and the data message is transmitted under a condition that the rate limit trigger parameter is greater than the preset threshold, so that the terminal does not affect the other terminals occupying the air interface to transmit the information in the process of the rate limit scheduling, and the overall service performance of the AP may also be improved.

In some examples, a variable $d_{i,tx}$ $(d_{i,rx})$ is maintained in a process of performing the rate limit on the downlink TX or the uplink RX of the terminal, and an initial value of the variable is 0. $D_{i,tx}T_F$ $(D_{i,rx}T_F)$ is added to $d_{i,tx}$ $(d_{i,rx})$ in each time duration of $T_F$. After a message is sent or received each time, it is determined whether a current $d_{i,tx}$ $(d_{i,rx})$ is less than 0; and under a condition that current $d_{i,tx}$ $(d_{i,rx})$ is less than 0, Tx and Rx rate limits are triggered. Under a condition that current $d_{i,tx}$ $(d_{i,rx})$ is greater than 0, the message size is subtracted from current $d_{i,tx}$ $(d_{i,rx})$. After a traffic monitoring triggers the rate limit, a rate limit in the Tx direction may be performed in two ways: the message is discarded directly, or the message is buffered until $d_{i,tx}$ is greater than 0.

As shown in Fig. 14, under a condition that the transmission information is the uplink transmission information, the above step S431 includes, but is not limited to, step S4313:

Step S4313, sending a trigger frame including a target minimum competition window parameter and a target maximum competition window parameter to the terminal, so that the terminal sends subsequent transmission information according to the target minimum competition window parameter and the target maximum competition window parameter.

In an embodiment of the present application, since the terminal cannot be used directly in the uplink to require the performing of the rate limit on the data message, under a condition that the transmission information is the uplink transmission information, the AP sends the trigger frame including the target minimum competition window parameter and the target maximum competition window parameter to the terminal, so that the terminal sends the subsequent transmission information according to the target minimum competition window parameter and the target maximum competition window parameter to achieve the rate limit scheduling of the transmission information.

Values of both the target minimum competition window parameter and the target maximum competition window parameter are maximum. It is noted that, the values of both the target minimum competition window parameter and the target maximum competition window parameter are made maximum, so that a corresponding terminal cannot preempt the air interface, and is rate limited actively.

In some examples, in the Rx direction the terminal cannot be required directly to perform the rate limit on the data message, so the multi-user enhanced distribution channel access (MUEDCA) mechanism specified by the 802.11 protocol is used to indirectly require the terminal to drop the packet. The enhanced distribution channel access (EDCA) mechanism defines the way in which the AP and the user access a wireless channel. Under a condition the air interface is free and the terminal is about to send the data message, it requires waiting for a period of time before the data message is sent. The EDCA mechanism reduces a probability of collisions between individual terminals. Specifically, EDCA defines four sending queues, each having four parameters, i.e., CWmin, Cwmax, TXOP and AIFS. The CWmin is a minimum competition window, and the smaller the Cwmin is, the higher its priority is; the Cwmax is a maximum competition window, and the smaller the Cwmax is, the higher its priority is; the TXOP is a transmission opportunity, and its parameter value is TXOPlimit which represents a longest time duration for channel occupation; and the AIFS is a channel free time duration that a user in an EDCA mode must wait for to get a transmission opportunity.

The CWmin and the CWmax determine a waiting time duration of the terminal. Therefore, under a condition that the CWmin and the CWmax are set to be very great, the terminal cannot send the message. In the embodiments of the present application, a similar EDCA mechanism is used for a channel access of the terminal, but a new set of MUEDCA parameters sent by the AP is forced to be used, and thus, the MUEDCA mechanism may be used for achieving the packet loss in the RX direction. Specifically, the following approach is used: the AP requires all terminals to use the MUEDCA mechanism to compete for the Rx air interface; the AP adds a capability element of service quality in a beacon frame which however does not contain the MUEDCA parameter; after receiving the beacon frame, the terminal must send a probe request frame to the AP to determine a corrected MUEDCA parameter; and after the AP receives the probe request frame, it is determined that whether the terminal needs to be rate-limited according to the above traffic monitoring method. Under a condition that the terminal needs to be rate-limited, the AP sends a new set of MUEDCA parameters through a protocol-specified trigger frame, and the CWmin and the CWmax are both configured to the maximum. Under this condition, a rate-limited terminal cannot preempt the air interface, and its rate is limited actively; and after receiving a probe request frame for a terminal that does not need to be rate-limited, the AP sends a set of original MUEDCA parameters through the trigger frame. The terminal is still receiving and sending normally. After the rate limit is terminated, the AP modifies the MUEDCA parameter sent in the beacon frame again, and modifies the MUEDCA parameter as the default for all terminals.

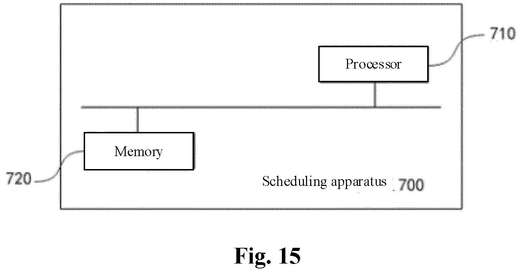

In addition, as shown in Fig. 15, an embodiment of the present application further provides a scheduling apparatus 700, and the scheduling apparatus 700 includes a memory 720, a processor 710 and a computer program stored on the memory 720 and executable on the processor 710.

The processor 710 may be connected to the memory 720 by a bus or other means.

It should be noted that, the scheduling apparatus 700 in this embodiment and the scheduling method in the above embodiments belong to the same inventive concept, and thus, these embodiments have the same implementation principle and technical effects, which is not described in detail here.

The non-transient software program and the instruction required to implement the scheduling method of the above embodiments are stored in the memory 720 and, when executed by the processor 710, perform the scheduling method in the above embodiments, for example, step S100 to step S400 of the method in Fig. 2, step S210 of the method in Fig. 3, step S310 to step S320 of the method in Fig. 4, step S321 of the method in Fig. 5, step S322 of the method in Fig. 6, step S330 of the method in Fig. 7, step S331 to step S334 of the method in Fig. 8, step S410 to step S430 of the method in Fig 9, step S431 of the method in Fig. 10, step S432 of the method in Fig. 11, step S4311 of the method in Fig. 12, step S4312 of the method in Fig. 13, and step S4313 of the method in Fig. 14 described above.

Moreover, an embodiment of the present application further provides a computer readable storage medium storing a computer executable instruction executed by a processor 710, for example, the processor 710 in the above embodiment of the scheduling apparatus 700, and may cause the above processor 710 to execute the scheduling method in the above embodiments, for example, step S100 to step S400 of the method in Fig. 2, step S210 of the method in Fig. 3, step S310 to step S320 of the method in Fig. 4, step S321 of the method in Fig. 5, step S322 of the method in Fig. 6, step S330 of the method in Fig. 7, step S331 to step S334 of the method in Fig. 8, step S410 to step S430 of the method in Fig 9, step S431 of the method in Fig. 10, step S432 of the method in Fig. 11, step S4311 of the method in Fig. 12, step S4312 of the method in Fig. 13, and step S4313 of the method in Fig. 14 described above.

The embodiments of the present application include: acquiring the transmission information corresponding to the terminal, in which the transmission information includes at least one of the uplink transmission information or the downlink transmission information; next, acquiring the information feature according to the transmission information; then, determining the information-transmission-rate limit value of the terminal based on the information feature ; and finally, scheduling the transmission information according to the information transmission rate limit value. According to the technical solution provided in the embodiments of the present application, the information-transmission-rate limit value may be determined based on the information feature corresponding to the terminal, and finally, the transmission information is scheduled according to the information transmission rate limit value, thereby bringing the better use experience to the user.

It will be appreciated by those of ordinary skill in the art that all or some of the steps in the method and the system disclosed above may be implemented as software, firmware, hardware or any suitable combination thereof. Some or all of physical components may be implemented as software executed by a processor, (such as, a central processing unit, a digital signal processor or a microprocessor), or hardware, or an integrated circuit, (such as, an application-specific integrated circuit). Such software may be distributed on a computer readable medium that may include a computer storage medium (or a non-transitory medium) and a communication medium (or a transitory medium). As is well known to those of ordinary skill in the art, the term computer storage medium includes a volatile and non-volatile, removable and non-removable medium implemented in any method or technology for storing information, (such as, a computer readable instruction, a data structure, a program module or other data). The computer storage medium includes, but is not limited to, RAM, ROM, EEPROM, a flash memory or other memory technology, CD-ROM, DVD or other optical disk storage, a magnetic cassette, a magnetic tape, magnetic disk storage or other magnetic storage devices, or any other medium that may be used for storing desired information and accessed by the computer. Moreover, as is well known to those of ordinary skill in the art, the communication medium typically contains the computer readable instruction, the data structure, the program module or other data in a modulated data signal (such as, a carrier wave or other transmission mechanisms) and may include any information delivery medium.

**Claims**

1. A scheduling method, comprising:

   acquiring transmission information corresponding to a terminal, wherein the transmission information comprises at least one of uplink transmission information or downlink transmission information;
   acquiring an information feature according to the transmission information;
   determining an information-transmission-rate limit value of the terminal based on the information feature; and
   scheduling the transmission information according to the information transmission rate limit value.

2. The scheduling method according to claim 1, wherein the transmission information comprises a plurality of data messages, and the acquiring an information feature according to the transmission information comprises:
   acquiring size information and time information of the data messages according to the plurality of data messages to obtain the information feature.

3. The scheduling method according to claim 1, wherein the determining an information-transmission-rate limit value of the terminal based on the information feature comprises:

   comparing the information feature at a current moment with the information feature at a previous moment to obtain a first comparison result; and
   determining the information-transmission-rate limit value of the terminal based on the first comparison result.

4. The scheduling method according to claim 3, wherein the transmission information corresponds to a preset rate limit initial value, and the determining the information-transmission-rate limit value of the terminal based on the first comparison result comprises:
   under a condition that the first comparison result is that the information feature at the current moment is better than the information feature at the previous moment, subtracting a preset rate limit step value from the rate limit initial value to obtain the information-transmission-rate limit value of the terminal.

5. The scheduling method according to claim 3, wherein the transmission information corresponds to a preset rate limit initial value, and the determining the information-transmission-rate limit value of the terminal based on the first comparison result comprises:
   under a condition that the first comparison result is that the information feature at the current moment is worse than the information feature at the previous moment, adding a preset rate limit step value to the rate limit initial value to obtain the information-transmission-rate limit value of the terminal.

6. The scheduling method according to claim 1, wherein the determining an information-transmission-rate limit value of the terminal based on the information feature comprises:
   inputting the information feature to a rate limit prediction model for predicting a rate limit to obtain the information-transmission-rate limit value of the terminal.

7. The scheduling method according to claim 6, wherein the inputting the information feature to a rate limit prediction model for predicting a rate limit comprises:

   calculating a cost parameter according to the information feature at the current moment;
   calculating a loss parameter according to the information feature at the current moment, the information feature at the previous moment, and the cost parameter;
   updating the rate limit prediction model according to the loss parameter; and

inputting the information feature at the current moment to the updated rate limit prediction model for predicting the rate limit.

8. The scheduling method according to claim 1, wherein the transmission information comprises a plurality of data messages, and the scheduling the transmission information according to the information-transmission-rate limit value comprises:

updating a preset rate limit trigger parameter according to the information-transmission-rate limit value at preset time intervals;
comparing a current rate limit trigger parameter with a preset threshold to obtain a second comparison result each time the data messages in the transmission information are acquired; and
scheduling the transmission information according to the second comparison result and the information transmission rate limit value.

9. The scheduling method according to claim 8, wherein the scheduling the transmission information according to the second comparison result and the information-transmission-rate limit value comprises:

under a condition that the second comparison result is that the current rate limit trigger parameter is less than or equal to the preset threshold, performing a rate limit scheduling on the transmission information according to the information transmission rate limit value; or
under a condition that the second comparison result is that the current rate limit trigger parameter is greater than the preset threshold, not performing a rate limit scheduling on the transmission information, and subtracting a message size of the data message from the current rate limit trigger parameter.

10. The scheduling method according to claim 9, wherein under a condition that the transmission information is downlink transmission information, and under a condition that the rate limit scheduling is performed on the transmission information according to the information transmission rate limit value, the rate limit scheduling comprises one of the following:

discarding a current data message; and
buffering the current data message until the rate limit trigger parameter is greater than the preset threshold.

11. The scheduling method according to claim 9, wherein under a condition that the transmission information is uplink transmission information, and under a condition that the rate limit scheduling is performed on the transmission information according to the information transmission rate limit value, the rate limit scheduling comprises:
sending a trigger frame comprising a target minimum competition window parameter and a target maximum competition window parameter to the terminal, so that the terminal sends subsequent transmission information according to the target minimum competition window parameter and the target maximum competition window parameter.

12. The scheduling method according to claim 11, wherein values of both the target minimum competition window parameter and the target maximum competition window parameter are maximum.

13. A scheduling apparatus comprising a memory, a processor and a computer program stored on the memory and executable on the processor, wherein the processor, when executing the computer program, implements the scheduling method according to any one of claims 1 to 12.

14. A computer readable storage medium storing a computer executable instruction, wherein the computer executable instruction is for performing the scheduling method according to any one of claims 1 to 12.

Access point

Terminal

Terminal

Terminal

**Fig. 1**

Acquiring transmission information corresponding to a terminal, in which the transmission information includes at least one of uplink transmission information or downlink transmission information

S100

Acquiring an information feature according to the transmission information

S200

Determining an information-transmission-rate limit value of the terminal based on the information feature

S300

Scheduling the transmission information according to the information transmission rate limit value

S400

**Fig. 2**

Acquiring size information and time information of the data messages according to the plurality of data messages to obtain an information feature

S210

## Fig. 3

Comparing an information feature at a current moment with an information feature at a previous moment to obtain a first comparison result

S310

Determining the information-transmission-rate limit value of the terminal based on the first comparison result

S320

## Fig. 4

Under a condition that the first comparison result is that the information feature at the current moment is better than the information feature at the previous moment, subtracting a preset rate limit step value from the rate limit initial value to obtain the information-transmission-rate limit value of the terminal

S321

## Fig. 5

Under a condition that the first comparison result is that the information feature at the current moment is worse than the information feature at the previous moment, adding a preset rate limit step value to the rate limit initial value to obtain the information-transmission-rate limit value of the terminal

S322

## Fig. 6

Inputting the information feature to a rate limit prediction model for predictIng a rate limit to obtain the information-transmission-rate limit value of the terminal

S330

## Fig. 7

Calculating a cost parameter according to the information feature at the current moment — S331

Calculating a loss parameter according to the information feature at the current moment, the information feature at the previous moment and the cost parameter — S332

Updating the rate limit prediction model according to the loss parameter — S333

Inputting the information feature at the current moment to the updated rate limit prediction model to predict the rate limit — S334

**Fig. 8**

Updating a preset rate limit trigger parameter according to the information-transmission- rate limit value at preset time intervals — S410

Comparing a current rate limit trigger parameter with a preset threshold to obtain a second comparison result each time the data messages in the transmission information are acquired — S420

Scheduling the transmission information according to the second comparison result and the information-transmission-rate limit value — S430

**Fig. 9**

Under a condition that the second comparison result is that the current rate limit trigger parameter is less than or equal to the preset threshold, performing a rate limit scheduling on the transmission information according to the information transmission rate limit value

S431

## Fig. 10

Under a condition that the second comparison result is that the current rate limit trigger parameter is greater than the preset threshold, not performing a rate limit scheduling on the transmission information, and subtracting a message size of the data message from the current rate limit trigger parameter

S432

## Fig. 11

Discarding the current data message

S4311

## Fig. 12

Buffering the current data message until the rate limit trigger parameter is greater than the preset threshold

S4312

## Fig. 13

Sending a trigger frame including a target minimum competition window parameter and a target maximum competition window parameter to the terminal, so that the terminal sends subsequent transmission information according to the target minimum competition window parameter and the target maximum competition window parameter

S4313

## Fig. 14

**Fig. 15**

## INTERNATIONAL SEARCH REPORT

| International application No. |
|---|
| **PCT/CN2023/100235** |

| A. | CLASSIFICATION OF SUBJECT MATTER |
|---|---|

H04W 28/22(2009.01)i

According to International Patent Classification (IPC) or to both national classification and IPC

| B. | FIELDS SEARCHED |
|---|---|

Minimum documentation searched (classification system followed by classification symbols)

IPC:H04W H04L H04B

Documentation searched other than minimum documentation to the extent that such documents are included in the fields searched

Electronic data base consulted during the international search (name of data base and, where practicable, search terms used)

CNTXT; WOTXT; ENTXTC; DWPI: 自适应, 自动, 调节, 调整, 限速, 速度, 速率, 时间, 统计, 学习, 模型, 预测, 局域网, WIFI, WLAN, AP, self, adaptive, auto, adjust, limit, speed, time, statistic, learning, model, prediction

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 102111807 A (BEIJING CEC HUADA ELECTRONIC DESIGN CO., LTD.) 29 June 2011 (2011-06-29) description, paragraphs 8-20 | 1-14 |
| A | CN 101110815 A (ZTE CORP.) 23 January 2008 (2008-01-23) entire document | 1-14 |
| A | CN 102710368 A (ZTE CORP.) 03 October 2012 (2012-10-03) entire document | 1-14 |
| A | WO 2018165924 A1 (HUAWEI TECHNOLOGIES CO., LTD.) 20 September 2018 (2018-09-20) entire document | 1-14 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **16 July 2023** | **21 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/100235**

| Patent document cited in search report | | | Publication date (day/month/year) | Patent family member(s) | | | Publication date (day/month/year) |
|---|---|---|---|---|---|---|---|
| CN | 102111807 | A | 29 June 2011 | None | | | |
| CN | 101110815 | A | 23 January 2008 | None | | | |
| CN | 102710368 | A | 03 October 2012 | None | | | |
| WO | 2018165924 | A1 | 20 September 2018 | KR | 20190125427 | A | 06 November 2019 |
| | | | | JP | 2020512738 | A | 23 April 2020 |
| | | | | CN | 109906631 | A | 18 June 2019 |
| | | | | IN | 201917036438 | A | 15 November 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210706882